# EUROPÄISCHE PATENTANMELDUNG

(11) **EP 2 020 545 A1**
(43) Veröffentlichungstag der Anmeldung: **04.02.2009**
(21) Anmeldenummer: 08012185.8
(22) Anmeldetag: 05.07.2008
(51) Int. Cl.: F16K 1/226

(54) **Absperrorgan mit verankertem Dichtelement**

(30) Priorität: 02.08.2007 DE 102007036244
(71) Anmelder: Adams GmbH & Co. Armaturen KG, 44653 Herne (DE)
(72) Erfinder: Fehringer, Hans-Jürgen, 44869 Bochum (DE)
(74) Vertreter: Behrendt, Arne

(57) **Zusammenfassung**

Die vorliegende Erfindung betrifft ein Absperrorgan (1) für eine Fluid-Leitung, insbesondere für die Turbinen-Zuleitung eines Wasserkraftwerkes, mit einem Gehäuse (2) und einer im Gehäuse (2) zwischen einer Offenstellung und einer Sperrstellung schwenkbaren Klappe (3), wobei die Klappe (3) mit mindestens einer schwalbenschwanzförmigen Nut (11) versehen ist, in welche ein elastisches Dichtelement (13) mit einem im Wesentlichen keilförmigen, sich nach außen verjüngendem Querschnitt eingelegt ist, und wobei in Sperrstellung das Dichtelement (13) mit seinem verjüngtem Außenrand an einem konischen Dichtsitz (6) des Gehäuses (2) dichtend anliegt, wodurch das Absperrorgan (1) gesperrt ist. Der Erfindung liegt die Aufgabe zugrunde, ein solches Absperrorgan so weiter zu bilden, dass ein Heraussaugen des Dichtelementes (13) selbst dann vermieden wird, wenn die Klappe (3) unter einem hohen hydraulischen Druck stehend geöffnet wird. Gelöst wird diese Aufgabe durch einen starren Stift (15), welcher sich im Wesentlichen quer zur Längserstreckung der Nut (11) durch das Dichtelement (13) erstreckt.

## Beschreibung

Die vorliegende Erfindung betrifft ein Absperrorgan für eine Fluid-Leitung, insbesondere für die Turbinen-Zuleitung eines Wasserkraftwerkes, mit einem Gehäuse und einer im Gehäuse zwischen einer Offenstellung und einer Sperrstellung schwenkbaren Klappe, wobei die Klappe mit mindestens einer schwalbenschwanzförmigen Nut versehen ist, in welche ein elastisches Dichtelement mit einem im Wesentlichen keilförmigen, sich nach außen verjüngendem Querschnitt eingelegt ist, und wobei in Sperrstellung das Dichtelement mit seinem verjüngtem Außenrand an einem konischen Dichtsitz des Gehäuses dichtend anliegt, wodurch das Absperrorgan gesperrt ist.

Ein Absperrorgan dieser Gattung wurde durch die deutsche Patentschrift DE 2 236 070 bekannt.

Absperrorgane der hier behandelten Bauweise dienen dazu, den Strömungsquerschnitt von Fluid-Leitungen - also Rohre oder Schläuche für flüssige und/oder gasförmige Medien - stufenlos bis zur vollkommenen Verschlossenheit zu verschließen. Durch die Winkelstellung des Absperrorgans zwischen Offenstellung und Sperrstellung kann damit der Massendurchsatz durch die Fluid-Leitung gesteuert werden.

Als Anwendungsbeispiel sei hier ein Wasserkraftwerk genannt. Dessen Herzstück ist eine Turbine, welche die Fließenergie des Wassers gewinnt, um einen Generator oder eine andere Maschine rotatorisch anzutreiben. Falls damit das gattungsgemäße Absperrorgan in der Turbinen-Zuleitung angeordnet wird, kann der Volumenstrom durch die Turbinen-Zuleitung und damit die Leistung der Turbine durch Verstellen der Klappe gesteuert werden. Selbstverständlich kann das Absperrorgan auch im Nachlauf der Turbine angeordnet werden, um die Turbinenleistung über die abfließende Wassermenge zu steuern; dies ist allerdings in der Praxis unüblich, da anderenfalls die Turbine stets mit der Wassersäule belastet wäre, was ihre Wartung erschwert.

Gerade in Wasserkraftwerken lastet auf der Klappe des versperrten Absperrorgans ein hoher hydrostatischer Druck von 25 bar. Beim Aufschwenken der Klappe wird der hydraulische Druck rasch in Fließenergie umgesetzt. Der damit einhergehende Druckverlust führt zu einer erheblichen Belastung der Dichtstelle des Absperrorgans, dabei insbesondere des gehäuseseitigen Dichtsitzes und des klappenseitigen Dichtelements. Die hohe Fließgeschwindigkeit durch den Öffnungsspalt führt zu Kavitationserosion, welche das Dichtelement aus der Nut zu reißen droht.

Bei der in der DE 2 236 070 gezeigten Lösung ist das im Querschnitt keilförmige Dichtelement in die schwalbenschwanzförmige Nut einvulkanisiert oder in nicht näher beschriebener Weise anderweitig befestigt. Die Erfahrung lehrt, dass in schwalbenschwanzförmige Nuten einvulkanisierte, keilförmige Dichtelemente der typischerweise beim Anfahren einer Wasserturbine entstehende Kavitationserosion nicht gewachsen sind, und aus der Nut gesaugt werden. Ein aufwendiger Austausch des Dichtelements ist die Folge. Nachteilig beim Einvulkanisieren ist auch, dass dieses Fügeverfahren nur mit Gummiwerkstoffen möglich ist, die Werkstoffwahl der Dichtung bleibt damit auf Gummi beschränkt.

Aus der DE 38 00 705 C2 ist die Dichtungsanordnung eines gattungsfremden Absperrorgans bekannt geworden. Dieses Absperrorgan ist für den Einsatz in Rohrleitungen bestimmt, die flüssige und gasförmige Medien bei hohen und tiefen Temperaturen führen, insbesondere in Fernwärmenetzen oder dergleichen. Für dessen Dichtungsanordnung wird ein Dichtelement in Gestalt eines Dichtungspakets aus aufeinander geschichteten Dichtringen vorgeschlagen, wobei sich in dem Dichtungspaket elastische Dichtringe mit metallischen Scheiben abwechseln. Diese Dichtungsanordnung wird sich zum Absperren von Hochtemperatur-Medien bewährt haben, vermag hohen hydrostatischen Drücken jedoch nicht Stand zu halten. Dies ist dadurch begründet, dass der hohe hydraulische Druck das Dichtungspaket verbiegt, wodurch zwischen den einzelnen Scheiben des Pakets erhebliche Scherkräfte auftreten. Diese Scherkräfte führen zu einer Überlastung der Klebestellen, so dass ein Ausreißen einzelner Dichtungsringe aus dem Paket zu befürchten ist. Ein weiterer Nachteil dieser Dichtungsanordnung ist der prinzipbedingte metallische Kontakt zwischen den metallischen Stützringen und dem Dichtsitz. Beim häufigen Öffnen und Schließen ist hier mit einem metallischen Abrieb an den Oberflächen zu rechnen, welcher die Dichtwirkung beeinträchtigt. Im Übrigen erfordert der metallische Dichtsitz eine hohe Maßhaltigkeit der Dichtpaarung, da metallische Dichtkörper vergleichsweise steif sind und deswegen Maßabweichungen nicht wie Gummidichtungen elastisch ausgleichen können. Die hohe Maßhaltigkeit wirkt sich zunächst auf die einzuhaltende Fertigungsgenauigkeit aus, welche die Produktionskosten steigert. Für Anwendungen, wo hohe hydrostatische Kräfte auf dem Absperrorgan lasten, sind metallische Dichtsitze gänzlich ungeeignet, da aufgrund der starken Verformungen der Klappe unter Last die enge Sitzgenauigkeit nicht eingehalten werden kann. So haben die Turbinenleitungen eines Wasserkraftwerks Nenndurchmesser von bis zu 2 Metern, die Wassersäule steht mit 25 bar an. Daraus resultiert eine auf der Klappe lastende Kraft von 7.85 MN, was der Gewichtskraft einer Masse von 800 t entspricht. Hydraulische Lasten dieser Größenordnung können nur noch elastisch abgedichtet werden.

Aus der DE 44 25 980 C2 ist ebenfalls eine gattungsfremde Absperreinrichtung für eine Gas führende Leitung bekannt. Deren Dichtelement umfasst einen metallischen Kern, auf dem ein Überzug aus einem elastischen KunststoffMaterial aufgebracht ist. Auch dieses Absperrorgan ist vornehmlich für gasförmige Fluide konzipiert und wird daher dem Druck einer in einem Wasserkraftwerk anstehenden Wassersäule nicht Stand halten. Darüber hinaus ist die Kavitationsresistenz der Dichtung abhängig von der Klebeverbindung zwischen dem elastischen Kunststoff-Dichtmaterial und dem metallischen Kern.

Im Hinblick auf diesen Stand der Technik liegt der vorliegenden Erfindung die Aufgabe zugrunde, ein Absperrorgan der eingangs genannten Gattung so weiter zu bilden, dass ein Heraussaugen des Dichtelementes aus der Nut selbst dann ausgeschlossen ist, wenn die Klappe unter einem hohen hydraulischen Druck stehend geöffnet wird. Darüber hinaus soll die Gestaltung des Absperrorgans die Werkstoffwahl des Dichtelements nicht einschränken, metallischer Kontakt innerhalb der Dichtstelle soll vermieden werden, die Klappe soll auch unter lastbedingter Verformung dicht halten und schließlich soll die Montage des Dichtelements erleichtert werden.

Gelöst werden diese Aufgaben dadurch, dass mindestens ein starrer Stift in dem Dichtelement vorgesehen wird, welcher sich im Wesentlichen quer zur Längserstreckung der Nut durch das Dichtelement erstreckt.

Der erfindungsgemäß vorgesehene Stift ist starrer als der elastische Dichtungswerkstoff, in welchen er eingebettet ist. Aufgrund der sich nach außen verengenden Schwalbenschwanzform der Nut blockiert der Stift ein Heraussaugen des Dichtelements formschlüssig. Der Stift wirkt als Verankerung für das Dichtelement. Der Ausreißwiderstand des Dichtelements wird somit nicht mehr durch die Klebekraft zwischen dem Dichtungswerkstoff und dem metallischen Verstärkungselement bestimmt, sondern durch die Biegesteifigkeit des Stiftes selbst. Da der Stift in dem Dichtelement eingebettet ist, wird er zusätzlich gegen Ausknicken gestützt. Eine Vulkanisation zwischen Dichtelement und Klappe ist nicht mehr erforderlich, die Werkstoffwahl ist insoweit nicht eingeschränkt: Das Dichtelement kann ebenso gut aus Gummi bestehen wie aus PTFE.

Vorzugsweise wird die Länge des starren Stiftes größer gewählt als die lichte Weite der Nut. Unter der lichten Weite der Nut ist ihre geringste Breite zu verstehen, die sie am Außenumfang der Klappe erreicht. Sofern der Stift länger ist, ist ein Austreiben des Dichtelements praktisch ausgeschlossen.

Allerdings ist es auch vorteilhaft, den Stift nicht beliebig lang zu bemessen, sondern kleiner als die Breite des Dichtelements, den es auf dem Radius einnimmt, auf dem sich der Stift erstreckt. Die Breite des ringförmigen Dichtelements nimmt aufgrund seines keilförmigen Querschnitts mit wachsendem Radius nach außen ab. Wenn das Dichtelement auf dem Radius, auf dem sich der Stift erstreckt, breiter ist als der Stift, bedeutet dies, dass der Stift im unbelasteten Zustand noch nicht an den Nutflanken anliegt. Eine Verformung des Dichtungselements aus seinem unbelasteten Zustand heraus wird dadurch nicht vollkommen unterbunden. Vielmehr lässt ein so eingekürzter Stift eine geringe radiale Dehnung des Dichtelements zu, so dass der Dichtungswerkstoff im Bereich des Stiftes nicht überbeansprucht wird.

Aufgrund ihrer Schwalbenschwanzform bildet die Nut eine Hinterschneidung, die ein Einquetschen des mit Stiften bewehrten Dichtungselements praktisch unmöglich macht. Um die Montage des Dichtungselements dennoch zu gestatten, empfiehlt es sich, die Klappe in einen Klappengrundkörper und in zumindest einen mit diesem verspannten Klemmring aufzuteilen, so dass die eine Flanke der Nut von dem Klemmring und die andere Flanke der Nut von dem Klappengrundkörper gebildet wird. Diese Gestaltung ermöglicht es nach Entfernung des Klemmrings, das Dichtelement in die geöffnete Nut des Klappengrundkörpers einzulegen und die Nut sodann durch Verspannen des Klappengrundkörpers mit dem Klemmring zu schließen.

Eine bevorzugte Ausführungsform der Erfindung sieht vor, das Dichtelement vom Nutgrund her mit einem Druckmedium beaufschlagbar zu gestalten. Durch Beaufschlagung des Dichtelements vom Nutgrund her - also radial in Richtung des Dichtsitzes - kann die Anpresskraft des Dichtelements gegen den Dichtsitz verstärkt werden. Es ist sogar denkbar, einen absperrenden Dichtsitz nur bei am Dichtelement anliegenden Druckmedium zuzulassen. Auf diese Weise ist es möglich, die Dichtung beim Öffnen der Klappe dadurch zu entlasten, dass ihr zunächst der radiale Druck von innen genommen wird, um die Dichtung vorzuöffnen. Alsdann wird die Klappe aufgeschwenkt, um den Durchfluss frei zu geben.

Die Druckbeaufschlagung eines Dichtelements kann besonders vorteilhaft mit einem zweiten Dichtelement kombiniert werden, welches mit dem ersten Dichtelement in Reihe geschaltet wird. Dabei ist lediglich eines der beiden Dichtelemente mit der Möglichkeit einer Druckbeaufschlagung auszustatten, währenddessen das andere Dichtelement in Schließstellung der Klappe stets an dem Dichtsitz des Gehäuses anliegt. Zusätzlich sollte eine Flanke der zweiten Nut einerseits durch den ersten Klemmring gebildet werden, der auch das erste Dichtelement flankiert. Die andere Flanke der zweiten Nut wird dann von dem zweiten Klemmring gebildet. Damit erhält man in Gestalt des zweiten Dichtelements eine Betriebsdichtung, die mit einem vergleichsweise geringem Aufwand ausgetauscht werden kann, währenddessen die erste, mit Druck beaufschlagte Dichtung als temporär aktivierte Revisionsdichtung dient.

Die Verankerung mit Hilfe von Stiften ist gerade bei der "aufblasbaren" Revisionsdichtung von Vorteil, da beim Beaufschlagen mit Druckmedium vom Nutgrund her die Gefahr besteht, die Revisionsdichtung mit übersteigerten Beaufschlagungsdruck aus der Nut heraus zu pressen. Dies wird durch die Stifte verhindert.

Das erfindungsgemäß vorgeschlagene Absperrorgan eignet sich hervorragend zum Verschließen von großkalibrigen Fluid-Leitungen, die flüssige Fluide mit hohen Drücken führen, wo also aufgrund der hohen Kräfte eine Verformung der Klappe zu erwarten ist. Gemeint sind dabei Leitungen mit einem Querschnitt zwischen einem und zwei Metern und Drücken um 25 bar. Ein besonders bevorzugter Einsatzzweck des erfindungsgemäßen Absperrorgans betrifft ein Wasserkraftwerk, in dem das Absperrorgan in der Turbinen-Zuleitung oder alternativ im Nachlauf der Turbine vorgesehen wird.

Grundsätzlich ist es auch möglich, die Lage von Dichtelement und Dichtsitz innerhalb des Absperrorgans zu vertauschen, sodass Dichtelement und Nut Bestandteil des unbewegten Gehäuses wird, währenddessen der konische Dichtsitz Teil der bewegten Klappe wird.

Ein Ausführungsbeispiel der vorliegenden Erfindung soll nun anhand der beiliegenden Zeichnungen und der zugehörigen, nun folgenden Beschreibung näher erläutert werden. Hierfür zeigen:

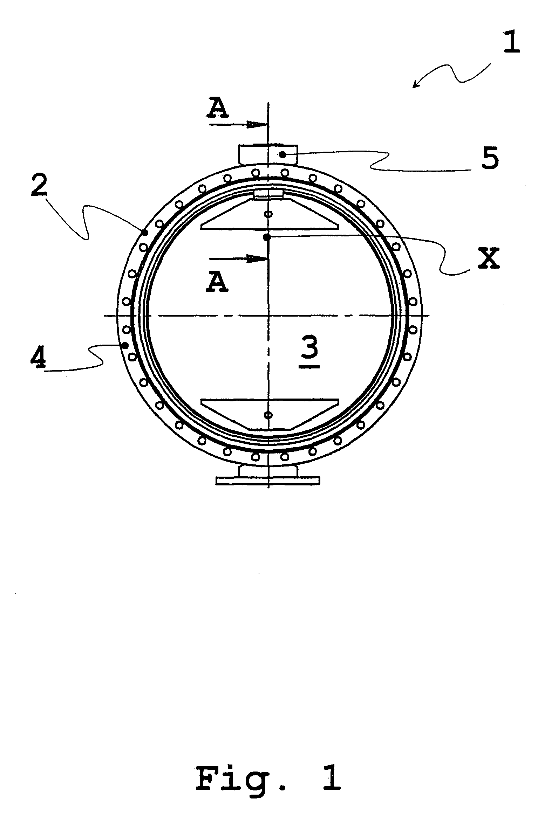

- Fig. 1:: Absperrorgan in Axialansicht;
- Fig. 2:: Dichtstelle des Absperrorgans im Axialschnitt.

Das erfindungsgemäße Absperrorgan ist in seiner Gesamtheit mit der Positionsnummer 1 bezeichnet. Seine wesentlichen Bestandteile sind ein Gehäuse 2 und eine darin um eine Schwenkachse X schwenkbar angeordnete Klappe 3. Die Klappe 3 ist in Axialansicht kreisrund. Das Gehäuse 2 wird über einen Flansch 4 mit einer hier nicht dargestellten Rohrleitung verbunden, so dass durch Schwenken der Klappe 3 um die Schwenkachse X der Durchlassquerschnitt des Absperrorgans 1 stufenlos einstellbar ist. Das Schwenken der Klappe 3 erfolgt mittels eines Schwenkantriebs 5, der hier nicht interessiert.

An seinem Innenumfang ist das Gehäuse 2 mit einem konischen Dichtsitz 6 versehen. Innerhalb des Dichtsitzes 6 angeordnet ist die Klappe 3. Die Klappe 3 ist an einer Schwenkwelle 7 befestigt, welche sich entlang der Schwenkachse X erstreckt und mittels des Schwenkantriebs 5 gedreht wird. Die Klappe 3 selbst wird gebildet aus einem Klappengrundkörper 8, mit welchem ein erster Klemmring 9 und ein zweiter Klemmring 10 verspannt sind.

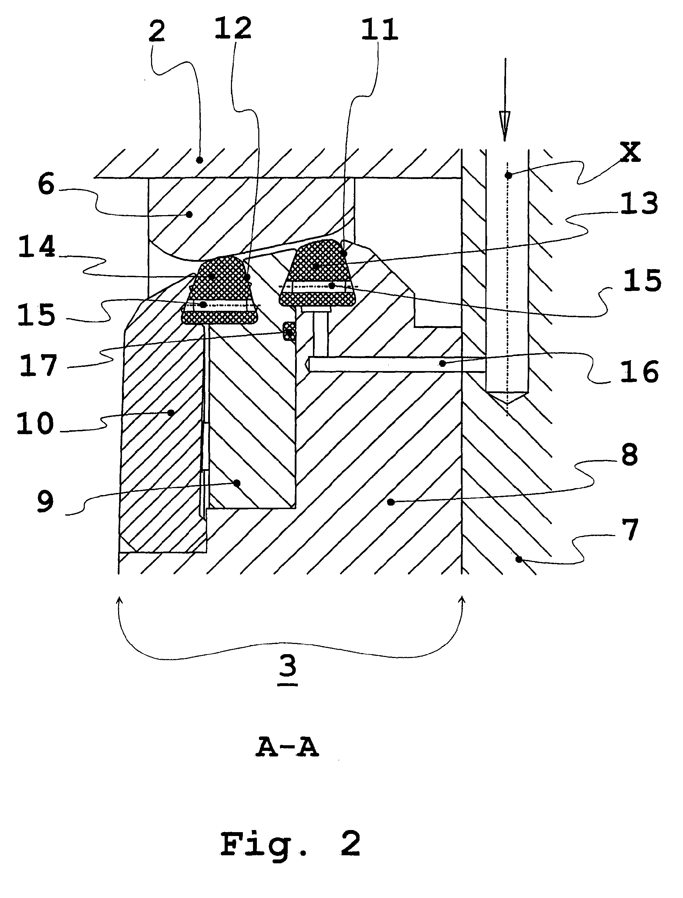

An ihrem Außenumfang, zum Dichtsitz 6 hin, ist die Klappe 3 mit zwei Nuten 11, 12 versehen, welche sich ringförmig entlang des Außenumfangs der Klappe 3 erstrecken. Im Querschnitt sind die Nuten 11, 12 im Wesentlichen schwalbenschwanzförmig gestaltet, vgl. Figur 2. Dies bedeutet, dass die Breite der Nuten 11, 12 radial nach außen abnimmt. An dem Dichtsitz 6 zugewandten Außenrand der Klappe 3 weisen die Nuten jeweils ihre geringste Breite, also ihr lichte Weite auf. Die Flanken der Nuten 11, 12 werden jeweils von unterschiedlichen Bauteilen der Klappe 3 gebildet: Die rechte Flanke der ersten Nut 11 bildet der Klappengrundkörper 8; die linke Flanke der ersten Nut 11, sowie die rechte Flanke der zweiten Nut 12 bildet der erste Klemmring 9; die linke Flanke der zweiten Nut 12 bildet schließlich der zweite Klemmring 10. Dank der eben beschriebenen Verteilung der Nutflanken auf die unterschiedlichen Bauteile 8, 9, 10 der Klappe 3 ist es möglich, trotz der aus der Schwalbenschwanzform der Nuten 11, 12 resultierenden Hinterschneidungen in die Nuten 11, 12 Dichtungselemente 13, 14 einzulegen. Die interne Abdichtung der Klemmringe 9, 10 erfolgt über einen standardmäßigen Runddichtring 17, der zwischen dem Klappengrundkörper 8 und dem ersten Klemmring 9 angeordnet ist.

Die Dichtungselemente 13, 14 erstrecken sich ebenfalls ringförmig entlang der Nut um die Klappe 3 herum und es sind im Querschnitt im Wesentlichen keilförmig, so dass sie sich radial auswärts verjüngen. Der Keilwinkel der Dichtungselemente 13, 14 entspricht dem Schwalbenschwanzwinkel der Nuten 11, 12, so dass die Dichtungselemente 13, 14 formschlüssig in den Nuten 11, 12 gehalten sind. Zusätzlich weist das Dichtelement ein geringes Übermaß auf, wodurch es elastisch vorgespannt in der Nut sitzt.

Um beim Öffnen der Klappe 3 ein Heraussaugen der Dichtelemente 13, 14 aus den Nuten 11, 12 zu verhindern, sind beide Dichtelemente 13, 14 mit einer Mehrzahl von starren Stiften 15 gespickt. Bei den Stiften 15 handelt es sich um zylindrische Metallstifte, die sich axial, also quer zur Längserstreckung der Nut 11 bzw. des Dichtungselementes 13 durch dieses hindurch erstrecken. Der Stift 15 erstreckt sich im Wesentlichen quer zur Längserstreckung der Nut 11, d. h. axial zum Absperrorgan 1 und senkrecht zur Radialrichtung des Absperrorgans 1. Die Lageangaben des Stiftes 15 in Bezug auf das Absperrorgan 1 gelten in Sperrstellung. In der in Figur 2 dargestellten Schnittdarstellung ist in jedem Dichtelement jeweils nur ein starrer Stift 15 erkennbar; tatsächlich werden aber eine Mehrzahl von Zylinderstiften in einem konstanten Winkelabstand voneinander entlang beider ringförmiger Dichtungselemente 13, 14 verteilt.

Der Stift 15 ist in einen entsprechenden Kanal des Dichtungselements 13 eingesteckt und somit von dem elastischen Dichtungsmaterial umgeben. Seine Länge ist größer gewählt als die lichte Weite der Nut 11, so dass ein radiales Austreiben des Dichtelements 11 nicht möglich ist. Zugleich ist seine Länge etwas kürzer gewählt als die Breite des Dichtelements 13 auf dem entsprechenden Radius. Dies bedeutet, dass die Bohrung, in welche der Stift 15 eingesteckt ist länger ist als der Stift 15 selbst. Der so verkürzte Stift 15 erlaubt im Dichtelement 13 eine gewisse radiale Dehnung in Richtung des Dichtsitzes 6. Die radiale Dehnung des Dichtelements 13 bleibt aber durch den Stift 15 begrenzt.

Die in Figur 2 dargestellte Dichtungsanordnung umfasst zwei parallel geschaltete Dichtelemente 13, 14, wobei das erste Dichtungselement 13 stromaufwärts als Revisionsdichtung vorgesehen ist und das zweite Dichtungselement 14 stromabwärts als Betriebsdichtung fungiert. Die Revisionsdichtung 13 ist mittels einer durch die Schwenkwelle 7 und dem Klappengrundkörper 8 geführten Druckkanals 16 vom Nutgrund her mit einem Druckmedium wie Wasser beaufschlagbar. Ohne radiale Beaufschlagung des ersten Dichtelements 13 liegt die Revisionsdichtung auch in Klappensperrstellung nicht am Dichtsitz 6 an, sodass ihre Dichtwirkung deaktiviert ist. Deaktiviert zieht sich das erste Dichtelement 13 weit seine Nut 11 zurück, sodass es kaum verschleißt. Die Betriebsdichtung indes ist stets über das zweite Dichtungselement 14 gewährleistet, welches bei geschlossener Klappe 3 am Dichtsitz dichtend anliegt.

Die doppelte Dichtanordnung mit separat aktivierbarer Revisionsdichtung macht es möglich, die Betriebsdichtung 14 bei anstehender Wassersäule auszutauschen. Hierzu wird bei geschlossener Klappe 3 die Revisionsdichtung dadurch aktiviert, dass erste Dichtelement 13 über die Druckleitung 16 mit Druckmedium beaufschlagt wird. Die Stifte 15 in der Revisionsdichtung 13 verhindern dabei ein Austreiben des ersten Dichtelements 13 aus der ersten Nut 11 durch übersteigerten Mediumsdruck. Die Betriebdichtung 14 wird durch Aktivierung der Revisionsdichtung 13 entlastet. Folglich kann der zweite Klemmring 10 von der trockenen Seite der Klappe 3 her abgeschraubt und das zweite Dichtungselement 14 ausgetauscht werden. Nach Remontage des zweiten Klemmrings 10 kann das erste Dichtungselement 13 wieder deaktiviert werden, so dass die Dichtungsfunktion fortan von dem ausgetauschten Dichtungselement 14 übernommen wird.

## Patentansprüche

1. Absperrorgan (1) für eine Fluid-Leitung, insbesondere für die Turbinen-Zuleitung eines Wasserkraftwerkes, mit einem Gehäuse (2) und einer im Gehäuse (2) zwischen einer Offenstellung und einer Sperrstellung schwenkbaren Klappe (3), wobei die Klappe (3) mit mindestens einer schwalbenschwanzförmigen Nut (11) versehen ist, in welche ein elastisches Dichtelement (13) mit einem im Wesentlichen keilförmigen, sich nach außen verjüngendem Querschnitt eingelegt ist, und wobei in Sperrstellung das Dichtelement (13) mit seinem verjüngtem Außenrand an einem konischen Dichtsitz (6) des Gehäuses (2) dichtend anliegt, wodurch das Absperrorgan (1) gesperrt ist,
**gekennzeichnet durch** mindestens einen starren Stift (15), welcher sich im Wesentlichen quer zur Längserstreckung der Nut (11) **durch** das Dichtelement (13) erstreckt.

2. Absperrorgan nach Anspruch 1, **dadurch gekennzeichnet, dass** die Länge des starren Stiftes (15) größer ist als die lichte Weite der Nut (11).

3. Absperrorgan nach Anspruch 1 oder 2, **dadurch gekennzeichnet, dass** die Länge des starren Stiftes (15) kleiner ist als die Breite des Dichtelements (13) auf dem Radius, auf dem sich der Stift (15) erstreckt.

4. Absperrorgan nach Anspruch 1, 2 oder 3, **dadurch gekennzeichnet, dass** die Klappe (3) einen Klappengrundkörper (8) und mindestens einen mit dem Klappengrundkörper (8) verspannten Klemmring (9) umfasst, wobei die eine Flanke der Nut (11) von dem Klemmring (9) und die andere Flanke der Nut (11) von dem Klappengrundkörper (8) gebildet wird.

5. Absperrorgan nach einem der Ansprüche 1 bis 4, **dadurch gekennzeichnet, dass** das Dichtelement (13) vom Nutgrund her mit einem Druckmedium beaufschlagbar ist.

6. Absperrorgan nach Anspruch 4 und 5, **dadurch gekennzeichnet, dass** die Klappe (3) mit einer zweiten schwalbenschwanzförmigen Nut (12) versehen ist, in welche ein zweites elastisches Dichtelement (14) mit einem im Wesentlichen keilförmigen, sich nach außen verjüngendem Querschnitt eingelegt ist, wobei in Sperrstellung das zweite Dichtelement (14) mit seinem verjüngtem Außenrand an dem konischen Dichtsitz (6) des Gehäuses (2) dichtend anliegt, wodurch das Absperrorgan (1) gesperrt ist, wobei die Klappe (3) einen zweiten Klemmring (10) umfasst, der mit dem ersten Klemmring (9) und mit dem Klappengrundkörper (8) verspannt ist, und wobei die eine Flanke der zweiten Nut (12) von dem zweiten Klemmring (10) und die andere Flanke der zweiten Nut (12) von dem ersten Klemmring (9) gebildet wird.

7. Verwendung eines Absperrorgans (1) nach einem der Ansprüche 1 bis 6 zum Absperren einer Fluid-Leitung mit einem Nenndurchmesser von etwa 1 Meter bis etwa 2 Meter bei einem Druck um etwa 25 bar.

8. Wasserkraftwerk mit einer Turbine zur Gewinnung der Fließenergie das Wassers und mit einer Turbinen-Zuleitung, durch welche das Wasser der Turbine zufließt, **dadurch gekennzeichnet, dass** in der Turbinen-Zuleitung ein Absperrorgan (1) nach einem der Ansprüche 1 bis 6 dergestalt angeordnet ist, dass die Turbinen-Zuleitung mittels des Absperrorgans (1) absperrbar ist.
